# EUROPÄISCHE PATENTANMELDUNG

(11) **EP 0 849 615 A2**
(43) Veröffentlichungstag der Anmeldung: **24.06.1998**
(21) Anmeldenummer: 97440137.4
(22) Anmeldetag: 17.12.1997
(51) Int. Cl.: G02B 6/42

(54) **Photonisches Bauelement mit elektrischen Leiterbahnen**

(30) Priorität: 20.12.1996 DE 19653094
(71) Anmelder: ALCATEL ALSTHOM COMPAGNIE GENERALE D'ELECTRICITE, 75008 Paris (FR)
(72) Erfinder: Schneider, Sigrun, 71732 Tamm (DE); Seibold, Gerhard, 71686 Remseck (DE); Ambrosy, Anton, Dr., 75233 Tiefenbronn (DE)
(74) Vertreter: Schätzle, Albin, Dipl.-Phys.

(57) **Zusammenfassung**

Die Erfindung betrifft photonische Bauelemente mit einem als Träger dienenden Substrat (SUB), darauf angeordneten optischen Wellenleitern (OWL) und elektrischen Leiterbahnen (ELB). Bekannt ist, die elektrischen Leiterbahnen auf einer dünnen, das Substrat bedeckenden Isolierschicht aufzubringen. Erfindungsgemäß werden die elektrischen Leiterbahnen (ELB) auf der Oberfläche (WOF) des optischen Wellenleiter (OWL) geführt. Dies führt zu einer besseren Isolierung der Leiterbahnen (ELB); außerdem wird die Substratfläche besser genutzt. Vorzugsweise führen elektrische Leiterbahnen (ELB), die in rampenartigen Einschnitten (RA) verlegt sind, von der Substratoberfläche (SOF) zur Oberfläche (WOF) der optischen Wellenleiter (OWL) hinauf. Besonders vorteilhaft kann die Erfindung angewendet werden in der Nähe von Laserriegeln, wo mehrere, zu koplanaren elektrischen Wellenleitern zusammengefaßte Leiterbahnen auf engem Raum angeordnet sind.

## Beschreibung

Die Erfindung betrifft ein photonisches Bauelement nach dem Oberbegriff des Anspruchs 1.

Eine derartiges photonisches Bauelement ist bekannt aus einer Veröffentlichung von S. Mino et al. mit dem Titel _{"}Loss Reduction in a Coplanar Waveguide on a Planar Lightwave Circuit (PLC) Platform by Quenching". Ein Silizium-Substrat trägt einen optischen Wellenleiter, eine Laserdiode, eine Ansteuerelektronik für die Laserdiode und elektrische Leiterbahnen, die koplanare elektrische Wellenleiter bilden. Da die elektrische Leitfähigkeit des Silizium-Substrat mit steigenden Frequenzen zunimmt, sind die elektrischen Leiterbahnen nicht unmittelbar auf der Oberfläche des Silizium-Substrats aufgebracht. Statt dessen sind die elektrischen Leiterbahnen vom Silizium-Substrat durch eine dünne Isolierschicht getrennt, die in dem dort beschriebenen photonischen Bauelement aus Kieselglas besteht. Bekannt sind auch Isolierschichten aus Polyimiden oder anderen organischen Materialien.

Die aufzubringenden Isolierschichten sind in der Regel sehr dünn. Ein Aufbringen dickerer Isolierschichten ist meist nicht möglich, da dann auf der Isolierschicht befestigte optoelektronische Bauelemente zu hoch über den Eingängen der optischen Wellenleiter angeordnet wären. Außerdem müssen bei dickeren Isolierschichten sich darauf befindende elektrische Leiterbahnen mit tiefer liegenden Bauelementen über Bond-Drähte verbunden werden. Beim Herstellen einer elektrischen Verbindung über Bond-Drähte wird viel Platz für die entsprechenden Werkzeuge benötigt. Dieser Platz ist in hochintegrierten photonischen Bauelementen, insbesondere in der Nähe von Laserriegeln, üblicherweise nicht vorhanden.

Die geringe Dicke der Isolierschicht führt dazu, daß die elektrische Isolierung nicht ausreichend ist. Wie auch der o. a. Veröffentlichung zu entnehmen ist, treten selbst in elektrischen Leiterbahnen, die auf einer Isolierschicht aufgebracht sind, bei hohen Frequenzen erhebliche elektrische Verluste auf.

Es ist daher Aufgabe der Erfindung, ein photonisches Bauelement mit elektrischen Leiterbahnen anzugeben, die geringe elektrische Verluste haben. Das photonische Bauelement soll es ermöglichen, viele optische, optoelektronische und elektrische Bauelemente auf engstem Raum anzuordnen. Die elektrischen Leiterbahnen sollen auch bei hoher Intergrationsdichte so große Abstände voneinander haben, daß eine gegenseitige Beeinträchtigung der elektrischen Eigenschaften vermieden wird.

Die Erfindung löst diese Aufgabe mit Hilfe der in Anspruch 1 aufgeführten Merkmale. Bei dem erfindungsgemäßen photonischen Bauelement werden die elektrische Leiterbahnen nicht auf einer gesondert aufzubringenden Isolierschicht, sondern auf der Oberfläche eines bereits vorhandenen optischen Wellenleiters geführt. Aufgrund seiner Dicke ist der optische Wellenleiter ein vorzüglicher elektrischer Isolator. Ein weiterer Vorteil dieser Anordnung besteht darin, daß die ansonsten ungenutzte Fläche auf dem bereits vorhandenen optischen Wellenleiter sinnvoll als Träger für elektrische Leiterbahnen genutzt wird. Dadurch lassen sich große Abstände zwischen den elektrischen Leiterbahnen leichter realisieren. Vor allem jedoch wird bei der erfindungsgemäßen Lösung für elektrische Leiterbahnen auf der Substratoberfläche kein oder weniger Platz benötigt, so daß dort anzuordnende optische und optoelektronische Bauelemente dichter gepackt werden können.

In einem besonders vorteilhaften Ausführungsbeispiel nach Anspruch 5 werden die seitlichen Begrenzungsflächen so mit Einschnitten versehen, daß im Bereich der Einschnitte die seitlichen Begrenzungsflächen schräg zur Substratoberfläche geneigt sind. Elektrische Leiterbahnen auf der Substratebene werden über diese schräg angeordneten Begrenzungsflächen geführt und mit elektrischen Leiterbahnen auf der Oberfläche des optischen Wellenleiters annähernd knickfrei verbunden. Die Einschnitte können auch so ausgeführt sein, daß die Verbindung zwischen der Substrat- und der Wellenleiteroberfläche kontinuierlich, d. h. vollkommen knickfrei, ist. Besonders vorteilhaft anwendbar ist die Erfindung, wenn die elektrischen Leiterbahnen als koplanare elektrische Wellenleiter ausgeführt werden. Weitere vorteilhafte Ausgestaltungen der Erfindung sind den Unteransprüchen entnehmbar.

Die Erfindung wird nachfolgend anhand der Ausführungsbeipiele und der Zeichnungen eingehend erläutert. Es zeigen:
- Fig. 1:: Einen Ausschnitt aus einem erfindungsgemäßen photonischen Bauelement in perspektivischer Darstellung nach Anspruch 1,
- Fig. 2:: Einen Ausschnitt aus einem erfindungsgemäßen photonischen Bauelement in perspektivischer Darstellung nach Anspruch 5,
- Fig. 3:: Einen Ausschnitt aus einem erfindungsgemäßen photonischen Bauelement in perspektivischer Darstellung nach Anspruch 6.

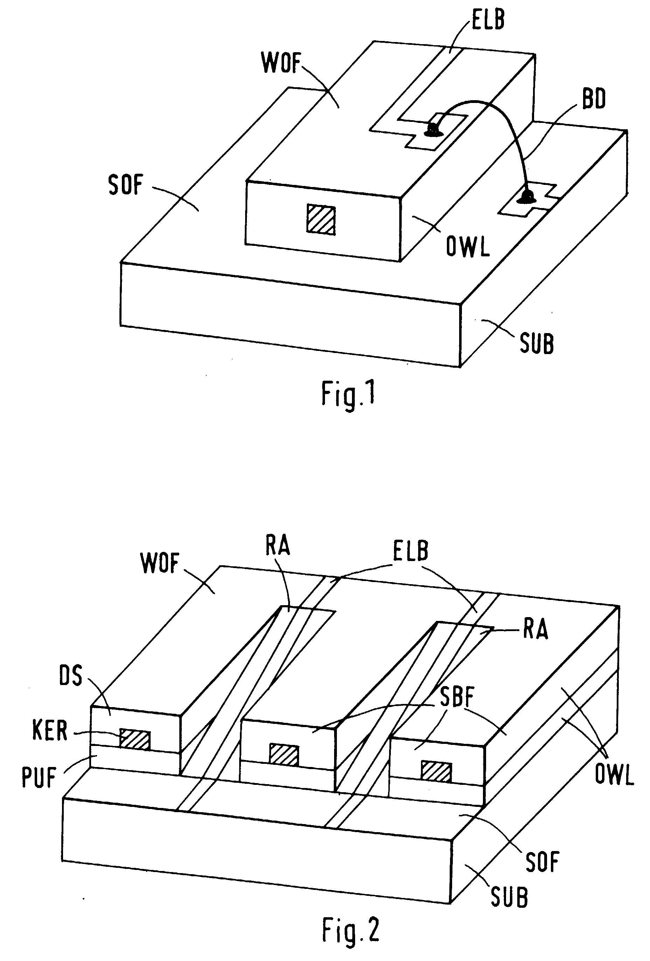

Das in Fig. 1 dargestellte erfindungsgemäße photonische Bauelement umfaßt ein als Träger dienendes Substrat SUB und einen planaren optischen Wellenleiter OWL, der auf einem Teil der Substratoberfläche SOF aufgebracht ist. Die vom Substrat weg weisende Oberfläche WOF des optischen Wellenleiters OWL ist mit einer elektrischen Leiterbahn ELB versehen.

In diesem Ausführungsbeispiel ist das Substrat SUB ein Silizium-Einkristall. Der optische Wellenleiter OWL besteht aus Kieselglas, welches mittels Flammhydrolyse (FHD, _{"}Flame Hydrolysis Deposition") auf der Substratoberfläche abgeschieden wird. Die elektrische Leiterbahn ELB wird auf der Oberfläche WOF des optischen Wellenleiters OWL nach den gleichen bekannten Verfahren aufgebracht, nach denen auch elektrische Leiterbahnen auf Kieselglas-lsolierschichten hergestellt werden.

Als Substratmaterial kann auch eine Keramik verwendet werden. Für die Herstellung des optischen Wellenleiters sind weitere dielektrische Materialien und Herstellungsverfahren bekannt und zur Ausführung der Erfindung geeignet. Möglich und vorteilhaft ist insbesondere die Verwendung von Polymeren wie Polymethylmethacrylat (PMMA). Als Materialien für die elektrische Leiterbahn bieten sich vor allem Gold oder Silber an.

Bei dem in Fig. 1 dargestellten Ausschnitt aus einem erfindungsgemäßen photonischen Bauelement stehen die seitlichen Begrenzungsflächen des optischen Wellenleiters OWL annähernd senkrecht auf der Substratoberfläche SOF. Derartige vertikale Begrenzungsflächen lassen sich beispielsweise durch ein - oder mehrstufige Tiefätz-Prozesse erzeugen. Auf der Substratoberfläche SOF sind - in Fig. 1 nicht dargestellte - optoelektronische oder rein elektronische Bauelemente wie Halbleiterlaser, Photodioden und/oder Steuerprozessoren angeordnet. Leiterbahnen auf der Substratoberfläche SOF stellen die elektrische Verbindung zu diesen Bauelementen her. Diese elektrischen Leiterbahnen auf der Substratoberfläche SOF sind über Bond-Drähe mit den auf der Oberfläche WOF des optischen Wellenleiters angeordneten elektrischen Leiterbahnen verbunden. In Fig. 1 ist dies exemplarisch für eine einzige elektrische Leiterbahn dargestellt.

Bei einem besonders vorteilhaften Ausführungsbeispiel der Erfindung ist die Verbindung zwischen Leiterbahnen auf der Substratoberfläche und solchen auf der Oberfläche des optischen Wellenleiters nicht über Bond-Drähte, sondern über elektrische Leiterbahnen hergestellt. Diese elektrische Leiterbahnen werden über Einschnitte in den seitlichen Begrenzungsflächen des optischen Wellenleiters geführt. Die Einschnitte sind so ausgeführt, daß im Bereich der Einschnitte die seitlichen Begrenzungsflächen schräg zur Substratoberfläche geneigt sind. Die dadurch entstehenden Rampen stellen sicher, daß die elektrische Leiterbahn knickfrei oder wenigstens annähernd knickfrei von der Substratebene zur Oberfläche des optischen Wellenleiters geführt wird.

Fig. 2 zeigt eine derartige Anordnung mit Einschnitten in den seitlichen Begrenzungsflächen des optischen Wellenleiters. Der optische Wellenleiter OWL, umfassend eine Pufferschicht PUF, einen Wellenleiterkern KER sowie eine Deckschicht DS, befindet sich auf einem Substrat SUB. Die vordere, dem Betrachter zugewandte seitliche Begrenzungsfläche SBF des optischen Wellenleiters OWL ist mit zwei Einschnitten versehen. Auf den durch die Einschnitte entstehenden Rampen RA sind elektrische Leiterbahnen ELB geführt. Sie verbinden elektrische Leiterbahnen auf der Substratoberfläche SOF mit solchen auf der Oberfläche WOF des optischen Wellenleiters OWL. Wie in Fig. 2 erkennbar, entstehen Knicke hier nur an den Übergangsstellen zwischen den schrägen, die Rampen RA bildenden seitlichen Begrenzungsflächen und den Oberflächen des Substrats bzw. des optischen Wellenleiters.

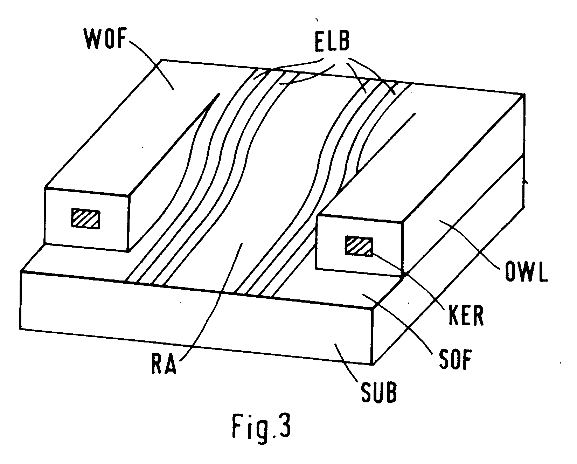

Sollen Knicke gänzlich vermieden werden, so können diese Übergangsstellen kontinuierlich ausgeführt werden. Dies ist Fig. 3 dargestellt. Die seitlichen Begrenzungsflächen sind hier im Bereich der Einschnitte nicht eben, sondern gekrümmt. Dadurch können die elektrische Leiterbahnen ELB über die Höhendifferenz zwischen der Substratoberfläche SOF und der Oberfläche OWL des optischen Wellenleiters OWL geführt werden, ohne daß ein Knick in den elektrische Leiterbahnen deren mechanische und elektrische Eigenschaften beeinträchtigt.

Auf welche Weise die schräg angeordneten seitlichen Begrenzungsflächen des optischen Wellenleiters hergestellt werden, hängt vor allem vom Material des optischen Wellenleiters ab. Bei optischen Wellenleitern auf der Basis von SiO₂ bieten sich naßchemische Ätzverfahren an. Die Neigungswinkel der Begrenzungsflächen zur Substratoberfläche betragen dann etwa 45°. Alternativ dazu können die Rampen grautonlithographisch definiert und anschließend trocken aus dem optischen Wellenleiter herauszuätzt werden. Dieses Verfahren ist insbesondere bei Polymerwellenleitern vorteilhaft einsetzbar. Die Grautonlithographie eignet sich auch hervorragend, um kontinuierliche Übergangsstellen zwischen den schrägen Begrenzungsflächen und den Oberflächen des Substrats bzw. des optischen Wellenleiters herzustellen.

In Fig. 3 sind die elektrische Leiterbahnen jeweils in Paaren zueinander angeordnet. Diese Paare bilden koplanare elektrische Wellenleiter, die Übertragungsraten im Bereich von mehreren Gbit/s erlauben. Für derartige koplanare elektrische Wellenleiter ist die Erfindung besonders vorteilhaft einsetzbar, da bei elektrischen Wellenleitern, die auf dem Substrat oder einer dünnen darauf befestigten Isolierschicht aufgebracht sind, bei hohen Frequenzen bzw. Übertragungsraten hohe elektrische Verluste und/oder Signalverfälschungen auftreten.

Wie bereits oben angesprochen, besteht ein wesentlicher Vorteil der Erfindung darin, daß auf der Substratoberfläche nur noch in der unmittelbaren Umgebung der optoelektronischen oder elektronischen Bauelemente elektrische Leiterbahnen angeordnet zu werden brauchen. Verbindungen zu weiter entfernten Punkten auf dem Substrat, etwa Gehäuseanschlüssen, erfolgen vorzugsweise auf der Oberfläche des optischen Wellenleiters. Dadurch lassen sich die Bauelemente auf der Substratoberfläche höher integrieren.

Dieser Aspekt ist insbesondere dann wichtig, wenn das von einem Laserriegel emittierte Licht in eine Anordnung von optischen Wellenleitern eingekoppelt werden soll. Der gegenseitige Abstand der im Laserriegel enthaltenen Laserdioden ist üblicherweise so klein, daß unter und in der Nähe des Laserriegels eine Vielzahl von elektrischen Leiterbahnen sehr dicht zueinander angeordnet werden muß. Erfindungsgemäß können diese elektrischen Leiterbahnen alle oder teilweise über Rampen auf die Substratoberfläche geführt werden. Der Abstand zwischen den elektrischen Leiterbahnen kann damit vergrößert und die elektrischen Übertragungseigenschaften verbessert werden.

## Patentansprüche

1. Photonisches Bauelement mit
- einem als Träger dienenden Substrat (SUB),
- einem auf dem Substrat (SUB) angeordneten optischen Wellenleiter (OWL)
- und einer elektrischen Leiterbahn (ELB),
**dadurch gekennzeichnet, daß**
die elektrische Leiterbahn (ELB) auf der dem Substrat (SUB) abgewandten Oberfläche (WOF) des optischen Wellenleiters (OWL) angeordnet ist.

2. Photonisches Bauelement nach Anspruch 1, bei der der optische Wellenleiter (OWL) eine Pufferschicht (PUF), eine Kernschicht (KER) und eine Deckschicht (DS) hat.

3. Photonisches Bauelement nach einem der Ansprüche 1 oder 2, dadurch gekennzeichnet, daß das Substrat (SUB) aus Silizium besteht.

4. Photonisches Bauelement nach einem der vorhergehenden Ansprüche, dadurch gekennzeichnet, daß der optische Wellenleiter (OWL) aus einem Glas oder einem Polymer besteht.

5. Photonisches Bauelement nach einem der vorhergehenden Ansprüche, bei der wenigstens ein Teil (RA) einer seitlichen Begrenzungsfläche (SBF) des optischen Wellenleiters schräg zur Substratoberfläche (SOF) angeordnet ist und die elektrische Leiterbahn (ELB) über diesen schrägen Teil der Begrenzungsfläche (RA) geführt ist.

6. Photonisches Bauelement nach Anspruch 5 , bei der der wenigstens eine schräg zur Substratoberfläche (SOF) angeordnete Teil (RA) der seitlichen Begrenzungsfläche (SBF) des optischen Wellenleiters (OWL) einen knickfreien Übergang zur Substratoberfläche (SOF) und zur Oberfläche des optischen Wellenleiters (WOF) hat.

7. Photonisches Bauelement nach einem der Ansprüche 5 oder 6, bei der der wenigstens eine schräg zur Substratoberfläche (SOF) angeordnete Teil (RA) der seitlichen Begrenzungsfläche (SBF) des optischen Wellenleiters (OWL) durch naßchemisches Ätzen oder durch Grautonlithographie erzeugt ist.

8. Photonisches Bauelement nach einem der vorhergehenden Ansprüche, die mehrere optische Wellenleiter (OWL) und/oder elektrische Leiterbahnen (ELB) hat.

9. Photonisches Bauelement nach Anspruch 8, bei der jeweils zwei elektrische Leiterbahnen (ELB) so nebeneinander angeordnet sind, daß diese beiden elektrischen Leiterbahnen einen koplanaren elektrischen Hochfrequenzwellenleiter bilden.
